# EUROPEAN PATENT APPLICATION

(11) **EP 1 956 741 A1**
(43) Date of publication of application: **13.08.2008**
(21) Application number: 06822825.3
(22) Date of filing: 01.11.2006
(51) Int. Cl.: H04L 1/16, H04L 1/18, H04L 29/08

(54) **RETRANSMISSION CONTROL METHOD AND RECEIVING-END APPARATUS**

(30) Priority: 01.11.2005 JP 2005318927
(71) Applicant: NTT DoCoMo, Inc., Chiyoda-ku Tokyo 100-6150 (JP)
(72) Inventor: HARADA, Atsushi c/o IP Department, NTT DoCoMo, Inc., Chiyoda-ku, Toyko 100-6150 (JP); UMESH, Anil c/o IP Department, NTT DoCoMo, Inc., Chiyoda-ku, Toyko 100-6150 (JP); ABETA, Sadayuki c/o IP Department, NTT DoCoMo, Inc., Chiyoda-ku, Toyko 100-6150 (JP); NAKAMURA, Takehiro c/o IP Department, NTT DoCoMo, Inc., Chiyoda-ku, Toyko 100-6150 (JP)
(74) Representative: HOFFMANN EITLE
(86) International application number: PCT/JP2006/321905
(87) International publication number: WO 2007/052719

(57) **Abstract**

A retransmission control method according to the present invention includes; transmitting, at a transmitter side apparatus 10, a new data indicator configured of multiple bits and updated when a new packet is transmitted, through a physical control channel associated with the physical data channel; and transmitting, at the receiver side apparatus 30, the transmission acknowledgment information, without depending on a decoding result of the packet received through the physical data channel, when the new data indicator received through the physical control channel is different from a new data indicator which has been expected to be received next at the receiver side apparatus.

## Description

### Technical Field

The present invention relates to a retransmission control method and a receiver side apparatus, in which a retransmission control is performed based on transmission acknowledge information, for a packet transmitted from a transmitter side apparatus to a receiver side apparatus through a physical data channel.

### Background Art

Conventionally, an HSDPA (High Speed Downlink Packet Access) mobile communication system has been known as a mobile communication system in which a retransmission control is performed (refer to Non-patent Document 1, for example).

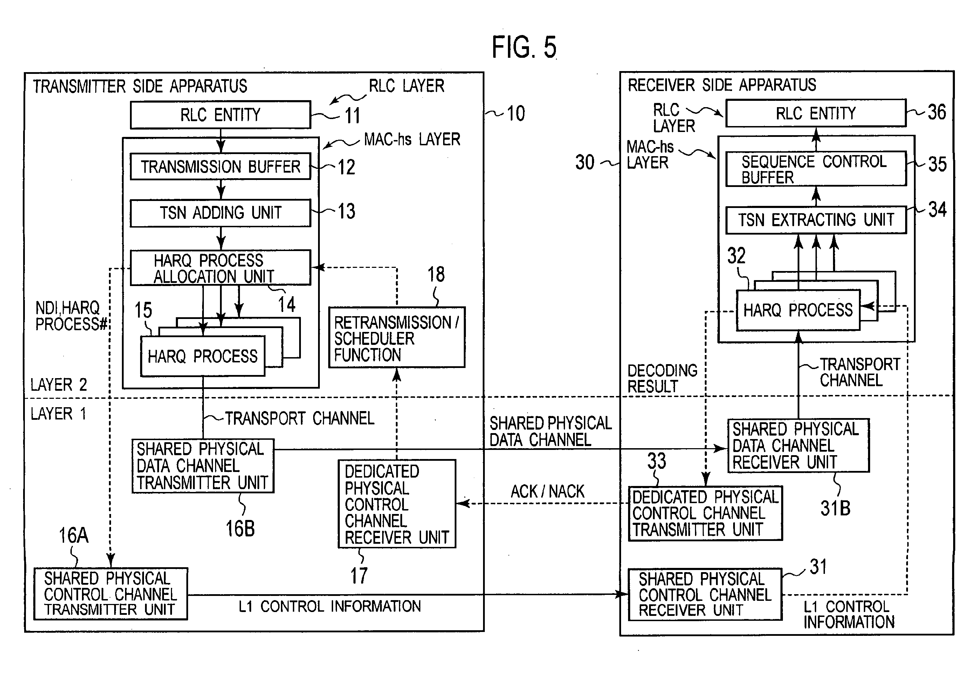

With reference to Figs. 5 to 8, a description will be given for the retransmission control in the conventional HSDPA mobile communication system.

The retransmission control in the HSDPA mobile communication system having the configuration shown in Fig. 5 is performed by "HARQ (Hybrid Automatic Repeat Request) retransmission control" in a MAC-hs layer, and "Outer ARQ retransmission control" in a RLC layer.

This HSDPA mobile communication system is configured such that the Outer ARQ retransmission control in the RLC layer can ultimately compensate for errors that could not be compensated in the MAC-hs layer; the errors such as a packet reception error, a packet decoding error, and a loss of a packet due to a false detection of transmission acknowledgment information (ACK/NACK) in the HARQ retransmission control (for example, a mobile station falsely detects a NACK when it is actually an ACK, or a mobile station falsely detects an ACK when it is actually a DTX state).

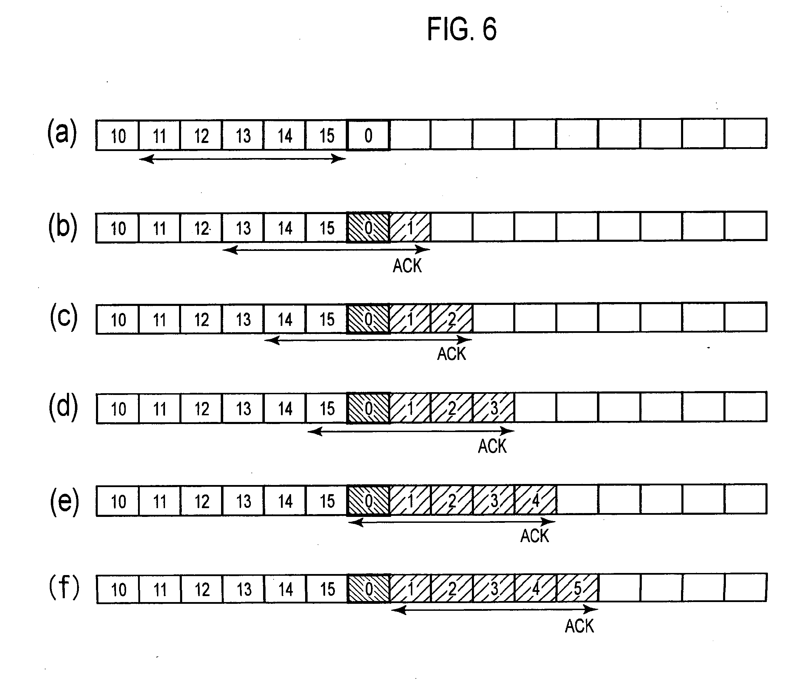

With reference to Figs. 6(a) to 6(f), a specific description will be given for the retransmission control in this HSDPA mobile communication system. Hereinbelow, the description will be given under the assumption that a single HARQ process is performed. In addition, it is supposed that "TSN (Transmission Sequence Number)" assigned to the respective packets cycles through value 0 to 15.

In Fig. 6(a), a MAC-hs layer of a receiver side apparatus (the mobile station) 30 successfully receives and decodes a packet "TSN=15". Accordingly, the MAC-hs layer of the receiver side apparatus 30 stores the packet "TSN=15" in a sequence control buffer 35, and concurrently extracts a packet "TSN=10" from the sequence control buffer 35 so as to forward the extracted packet to the RLC layer. Then, the "TSN" of the packet that the receiver side apparatus 30 expects to receive next becomes "0".

Meanwhile in Fig. 6(b), the packet "TSN=0" is lost in the MAC-hs layer of the receiver side apparatus 30, because of any of the aforementioned reasons. Accordingly, although "TSN" of the packet that the receiver side apparatus 30 expects to receive next remains to be "0," a transmitter side apparatus (a base station) 10 transmits a packet "TSN=1" since the transmitter side apparatus 10 has not received a NACK for the packet "TSN=0."

Thereafter, the MAC-hs layer of the receiver side apparatus 30 successfully receives and decodes the packet "TSN=1". Accordingly, the MAC-hs layer of the receiver side apparatus 30 stores the packet "TSN=1" in the sequence control buffer 35, and concurrently extracts a packet "TSN=12" from the sequence control buffer 35 so as to forward the extracted packet to the RLC layer.

Then, the similar operation is repeated in Figs. 6(c) to 6(e). Meanwhile, the "TSN" of the packet that the receiver side apparatus 30 expects to receive next remains to be "0."

Then, in Fig. 6(f), the MAC-hs layer of the receiver side apparatus 30 successfully receives and decodes a packet "TSN=5". Accordingly, the MAC-hs layer of the receiver side apparatus 30 stores the packet "TSN=5" in the sequence control buffer 35.

At this time, the MAC-hs layer of the receiver side apparatus 30 attempts to extract the packet "TSN=0" from the sequence control buffer 35 so as to pass the extracted packet to the RLC layer, but fails to extract the packet since the packet "TSN=0" is not stored in the sequence control buffer 35.

In response, an RLC entity 36 of the RLC layer detects the loss of the packet "TSN=0", and requests the transmitter side apparatus 10 to retransmit the packet "TSN=0" by the OuterARQ retransmission control.

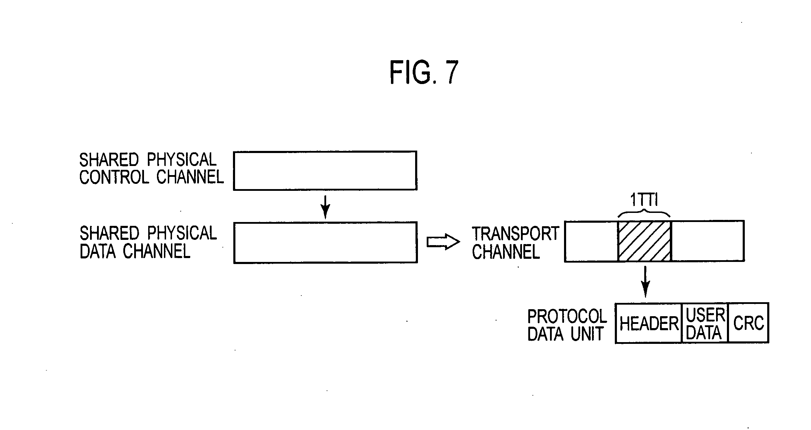

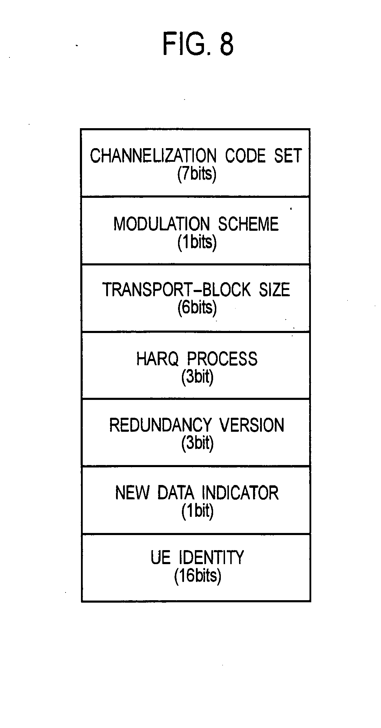

As shown in Fig. 7, the HSDPA mobile communication system is configured such that the base station transmits, to the mobile station, a "HS-SCCH (High Speed Shared Control Channel)" as a shared physical control channel for transmitting L1 control information shown in Fig. 8, and a "HS-PDSCH (High Speed Physical Downlink Shared Channel)" as a shared physical data channel for transmitting a packet.

Here, the HS-SCCH is associated with the HS-PDSCH, and the mobile station is configured to receive a packet included in the HS-PDSCH associated with the received HS-SCCH, according to the L1 control information included in the received HS-SCCH.

Moreover, the HSDPA mobile communication system is configured such that an "HS-DSCH (High Speed Downlink Shared Channel)" is multiplexed on the HS-PDSCH as a transport channel.

The HSDPA mobile communication system is configured such that a single protocol data unit ("MAC-hs PDU") (hereinafter referred to as the packet) is transmitted in each of a transmission time interval (TTI) of the HS-DSCH. Note that the "TSN" of each of the packet is inserted into the header portion of the packet.

In the HSDPA mobile communication system, the mobile station determines whether or not each of the TTI of the HS-DSCH is assigned to the mobile station itself, based on a "UE identity (16 bits)" included in the L1 control information (see Fig. 8) received through the HS-SCCH.

Then, when the TTI of the HS-DSCH is assigned to the mobile station itself, the mobile station determines whether or not a packet to be transmitted at the TTI is a newly transmitted packet or a retransmitted packet, based on an "NDI (New Data Indicator (1 bit))" in the L1 control information (see Fig. 8). According to the determination result, the mobile station performs the HARQ retransmission control in the MAC-hs layer.

Here, the "NDI" used in the conventional HSDPA mobile communication system is configured of 1 bit, and is configured to be updated when a new packet is transmitted. Specifically, the "NDI" is configured to take two values alternately, in a manner such as "0" to "1."

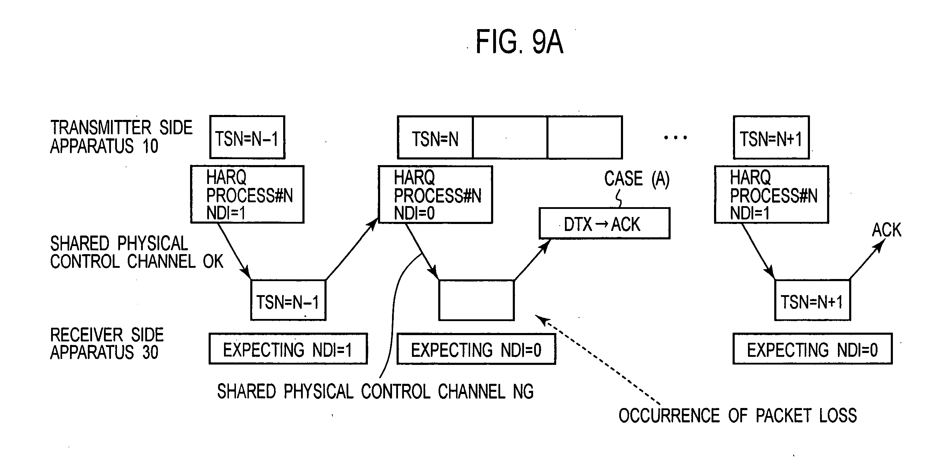

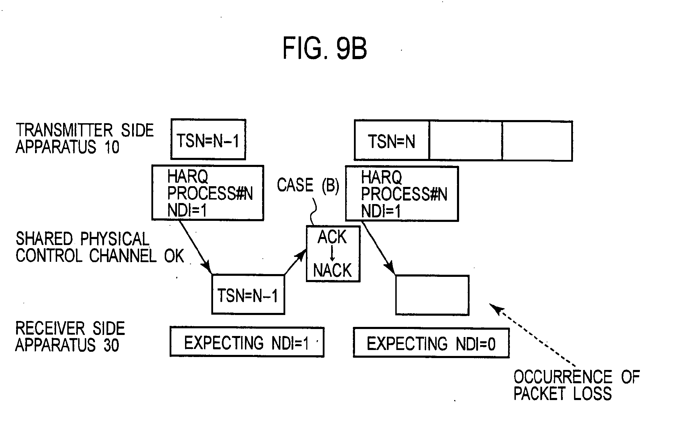

With reference to Figs. 9A and 9B, a description will be given of a case in the conventional HSDPA mobile communication system, in which an "NDI=1", which is the value notified from the HS-SCCH, is not consistent with an "Expecting NDI=0,"which is an NDI that the receiver side apparatus 30 has been expecting to receive next.

The following two cases may be assumed as the cause of the above-described inconsistency;
- A case (A) in which the transmitter side apparatus 10 falsely detects a reception of an ACK, and transmits a new packet (TSN=N+1) when the receiver side apparatus 30 is actually in the DTX state.
- A case (B) in which the transmitter side apparatus 10 falsely detects an ACK as being a NACK for the packet (TSN=N-1), and retransmits the packet (TSN=N-1).

Firstly, the case (A) will be described with reference to Fig. 9A.

As shown in Fig. 9A, when the receiver side apparatus 30 fails to perform a reception processing (a decoding processing) of the L1 control information included in the HS-SCCH associated with the HS-PDSCH for transmitting a packet "TSN=N," the receiver side apparatus 30 cannot determine whether or not the packet is transmitted to the mobile station itself. Accordingly, the receiver side apparatus 30 cannot decode the packet "TSN=N, which is included in the HS-PDSCH following thereto.

Therefore, the receiver side apparatus 30 cannot transmit a dedicated physical control channel (HS-DPCCH: High Speed Dedicated Physical Control Channel) (HARQ feedback physical channel) for transmitting transmission acknowledgment information (a decoding result of the packet "TSN=N") such as an ACK or a NACK for the packet "TSN=N." Hence, the receiver side apparatus 30 goes into a no-transmission state referred to as the "DTX: discontinuous transmission."

Here, when the transmitter side apparatus 10 falsely detects, due to a poor condition of a radio propagation path, a reception of the ACK for the packet "TSN=N" through the HARQ feedback physical channel although the receiver side apparatus 30 is actually in the DTX (no-transmission) state, the transmitter side apparatus 10 transmits a packet "TSN=N+1" as a new packet, and thus the packet "TSN=N" is lost in the receiver side apparatus 30.

In addition, the receiver side apparatus 30 generally determines whether the packet transmitted through the HS-PDSCH associated with the HS-SCCH is the new packet or a retransmitted packet, based on the "NDI" transmitted through the HS-SCCH. However, in the above-described case, the inconsistency occurs between the "NDI=1", which is notified through the HS-SCCH, and the "Expecting NDI=0," which is an NDI that the receiver side apparatus 30 has been expecting to receive next.

Secondly, the case (B) will be described with reference to Fig. 9B.

As shown in Fig. 9B, although the receiver side apparatus 30 successfully receives a packet "TSN=N-1" and transmits an ACK for the packet "TSN=N-1," the transmitter side apparatus 10 falsely detects the ACK as being a NACK, and retransmits the packet "TSN=N-1."

In the above-described case, the receiver side apparatus 30 has been expecting to receive a newly transmitted packet "TSN=N," and thus an inconsistency occurs between the "NDI=0", which is the value notified through the HS-SCCH corresponding to the packet "TSN=N-1" retransmitted from the transmitter side apparatus 10, and the "Expecting NDI=1," which is an NDI that the receiver side apparatus 30 has been expecting to receive next.

Here, the "NDI" is configured of 1 bit. Therefore, a problem arises that in both of the cases (A) and (B), the receiver side apparatus 30 cannot determine by which case (A) or (B), the aforementioned inconsistency has been occurred.

Moreover, in the conventional HSDPA mobile communication system, the receiver side apparatus 30 can only transmit any one of the ACK or the NACK as the transmission acknowledgment signal on the HARQ feedback physical channel.

Accordingly, in the example shown in Fig. 9A, even when the receiver side apparatus 30 decodes the packet "TSN=N+1" included in the HS-PDSCH and transmits the ACK or the NACK as a notification based on the decoding result, the transmitter side apparatus 10 cannot retransmit the packet "TSN=N". Thus, the packet "TSN=N" is to be lost in the receiver side apparatus 30.

This lost packet "TSN=N" is compensated by the Outer ARQ retransmission control in the RLC layer.

However, when the RLC layer detects the packet loss arisen from the false detection of the transmission acknowledgment information included in the HARQ feedback physical channel and performs the retransmission control for the packet, the RLC layer performs the retransmission control based on a reception status report of the RLC layer (STATUS REPORT) that is transmitted regularly, or an expiry of a timer set for waiting for the transmission acknowledgement information for the packet. Accordingly, the conventional HSDPA mobile communication system has a problem that detecting the loss of the packet takes several tens of milliseconds, and that a transmission delay increases.

Non-Patent Document 1: 3GPP TS25. 308

### Disclosure of the Invention

The present invention has been made in view of the aforementioned problem, and has an object of providing a retransmission control method and a receiver side apparatus, which performs a retransmission control by promptly detecting a loss of a packet, when a transmitter side apparatus falsely detects transmission acknowledgment information transmitted through a HARQ feedback physical channel.

A first aspect of the present invention is summarized as a retransmission control method which performs a retransmission control for a packet transmitted from a transmitter side apparatus to a receiver side apparatus through a physical data channel based on transmission acknowledgment information for the packet, including: transmitting, at the transmitter side apparatus, a new data indicator configured of multiple bits and updated when a new packet is transmitted, through a physical control channel associated with the physical data channel; and transmitting, at the receiver side apparatus, the transmission acknowledgment information, without depending on a decoding result of the packet received through the physical data channel, when the new data indicator received through the physical control channel is different from a new data indicator which has been expected to be received next at the receiver side apparatus.

In the first aspect of the present invention, in the transmission of the acknowledgement information, the receiver side apparatus may be configured to transmit a transmission acknowledgement information that indicates a retransmission request for a lost packet, when the received new data indicator is ahead of the new data indicator which has been expected to be received next at the receiver side apparatus.

In the first aspect of the present invention, in the transmission of the acknowledgement information, the receiver side apparatus may be configured to transmit a transmission acknowledgement information that indicates a reception success of the packet, when the received new data indicator is behind the new data indicator which has been expected to be received next at the receiver side apparatus.

A second aspect of the present invention is summarized as a receiver side apparatus, including: a physical control channel receiver unit configured to receive a physical control channel that includes a new data indicator configured of multiple bits and updated when a new packet is transmitted; a physical data channel receiver unit configured to receive a physical data channel associated with the physical control channel; and a transmission acknowledgment information transmitter unit configured to transmit the transmission acknowledgment information, without depending on a decoding result of the packet received through the physical data channel, when the new data indicator received through the physical control channel is different from a new data indicator which has been expected to be received next at the receiver side apparatus.

In the second aspect of the present invention, the physical control channel transmitter unit may be configured to transmit the transmission acknowledgement information that indicates a retransmission request for a lost packet, when the received new data indicator is ahead of the new data indicator which has been expected to be received next at the receiver side apparatus.

In the second aspect of the present invention, the physical control channel transmitter unit may be configured to transmit the transmission acknowledgement information that indicates a reception success of the packet, when the received new data indicator is behind the new data indicator which has been expected to be received next at the receiver side apparatus.

### Brief Description of the Drawings

[Fig. 1] Fig. 1 is a functional block diagram of a transmitter side apparatus and a receiver side apparatus according to a first embodiment of the present invention.
[Fig. 2] Fig. 2 is a diagram showing a format of a shared physical control channel used in a mobile communication system according to the first embodiment of the present invention.
[Fig. 3] Fig. 3 is a flowchart showing an operation of the receiver side apparatus according to the first embodiment of the present invention.
[Fig. 4A] Fig. 4A is a diagram for explaining a retransmission control in the mobile communication system according to the first embodiment of the present invention.
[Fig. 4B] Fig. 4B is a diagram for explaining the retransmission control in the mobile communication system according to the first embodiment of the present invention.
[Fig. 5] Fig. 5 is a functional block diagram of a transmitter side apparatus and a receiver side apparatus according to a conventional technique.
[Fig. 6] Fig. 6 is a diagram for describing a retransmission control in the mobile communication system according to the conventional technique.
[Fig. 7] Fig. 7 is a diagram showing a channel configuration used in the mobile communication system according to the conventional technique.
[Fig. 8] Fig. 8 is a diagram showing a format of a shared physical control channel used in the mobile communication system according to the conventional technique.
[Fig. 9A] Fig. 9A is a diagram for describing a problem in retransmission control in the mobile communication system according to the conventional technique.
[Fig. 9B] Fig. 9B is a diagram for describing the problem in retransmission control in the mobile communication system according to the conventional technique.

### Best Mode for Carrying out the Invention

### (A mobile communication system according to a first embodiment of the present invention)

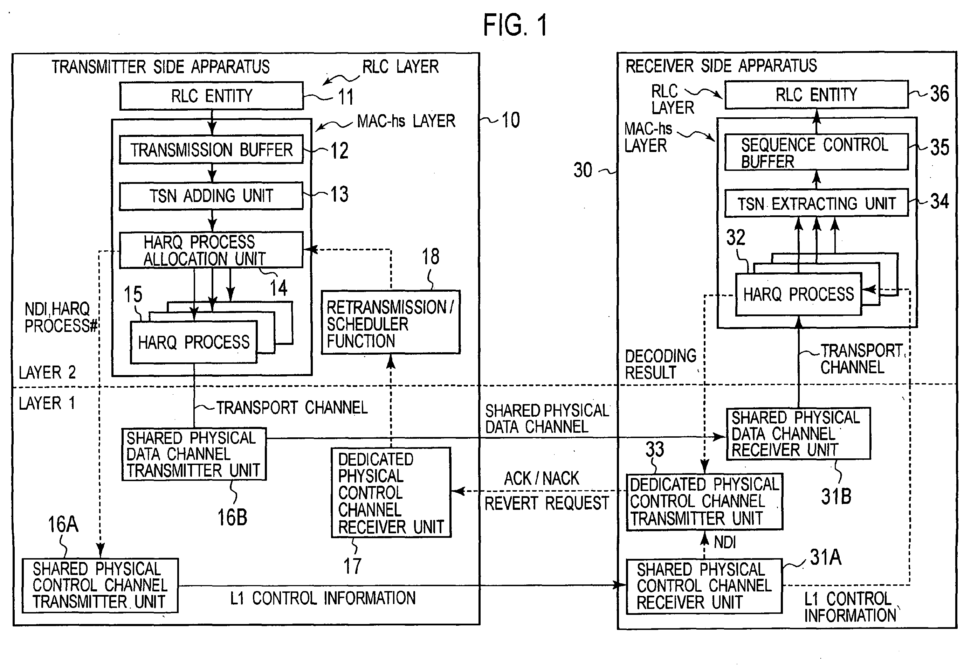

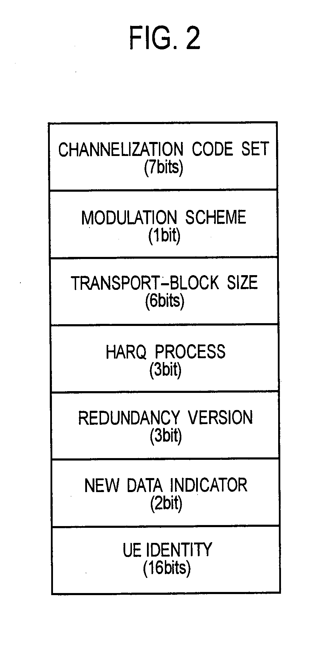

A configuration of the mobile communication system according to the first embodiment of the present invention will be described with reference to Figs. 1 and 2.

The mobile communication system according to the present embodiment is configured to perform a retransmission control of a packet transmitted from a transmitter side apparatus 10 to a receiver side apparatus 30 through a physical data channel, based on transmission acknowledgment information (ACK/NACK/DTX state) for the packet.

Here, an "HS-PDSCH" can be assumed as an example of the physical data channel (shared physical data channel), and an "HS-SCCH" can be assumed as an example of a physical control channel (shared physical control channel). Further, an "HS-DSCH" can be assumed as an example of a transport channel multiplexed on the HS-SCCH, and a "MAC-hs PDU" can be assumed as an example of a protocol data unit (the packet) transmitted through the HS-DSCH. However, it should be noted that the present invention is not limited to these examples.

Moreover, the transmitter side apparatus 10 and the receiver side apparatus 30 according to the present invention are applicable to both downlink communication (i.e., the transmitter side apparatus 10 is a base station and the receiver side apparatus 30 is a mobile station) and uplink communication (i.e., the transmitter side apparatus 10 is a mobile station and the receiver side apparatus 30 is a base station).

As shown in Fig. 1, the transmitter side apparatus 10 includes, as a layer 2 function, an RLC entity 11, a transmission buffer 12, a TSN adding unit 13, a HARQ process allocation unit 14, multiple HARQ processes 15, and a retransmission/scheduler function 19. Additionally, the transmitter side apparatus 10 includes, as a Layer 1 function, a shared physical control channel transmitter unit 16A, a shared physical data channel transmitter unit 16B, and a dedicated physical control channel receiver unit 17.

The RLC entity 11 is configured to perform the above-described Outer ARQ retransmission control. Note that the RLC entity 11 may be configured to perform the Outer ARQ retransmission control in the packet unit, or in a plurality of packets unit.

The transmission buffer 12 is configured to temporarily store user data transmitted from the RLC entity 11, and then to transmit the user data to the TSN adding unit 13.

The TSN adding unit 13 is configured to generate the protocol data unit (the packet) to be transmitted through the transport channel multiplexed on the shared physical data channel, by adding such as a header including a TSN, an error correction code (such as a CRC) and the like to the user data transmitted from the transmission buffer 12.

The HARQ process allocation unit 14 is configured to allocate the HARQ process used for transmitting each of the packets, in response to an instruction from the retransmission/scheduler function 18, the instruction relating to such as a HARQ retransmission control, a scheduling control or the like.

Specifically, in response to the instruction from the retransmission/scheduler function 18, the HARQ process allocation unit 14 is configured to discard the user data stored in the transmission buffer 12, or to determine a packet to be transmitted (the new packet or the retransmission packet) in each of the transmission opportunities (i.e., each of the TTI in the above transport channel).

In addition, the HARQ process allocation unit 14 is configured to notify, to the control channel transmitter unit 16A, a "HARQ process #" that specifies the HARQ process used for transmitting the packet in each of the transmission opportunities (i.e., each of the TTI in the above transport channel).

The HARQ process allocation unit 14 is also configured to update the new data indicator (NDI) when a new packet is transmitted, and to notify the NDI to the dedicated physical control channel transmitter unit 16A.

Each of the HARQ processes 15 is configured to instruct the shared physical data channel transmitter unit 16B to transmit the packet, when the HARQ process allocation unit 14 instructs the HARQ process 15 to transmit the packet (the new packet or the retransmission packet).

The retransmission/scheduler function 18 is configured to perform the HARQ retransmission control and the scheduling control for each of the packets, based on the transmission acknowledgment information (ACK/NACK/Revert Request) included in the dedicated physical control channel received at the dedicated physical control channel receiver unit 17.

The shared physical control channel transmitter unit 16A is configured to transmit, through a shared physical control channel (physical control channel), the L1 control information notified from the HARQ process allocation unit 14. The L1 control information includes the NDI and the HARQ process #. Fig. 2 shows an example of the L1 control information to be transmitted through the shared physical control channel.

Here, the NDI (new data indicator) is configured of multiple bits (2 bits in the example in Fig. 2), and is configured to be updated when the new packet is transmitted. For instance, when the NDI is configured of 2 bits, the NDI is configured such that the value cycles through four values "00," "01," "10," and "11," in a manner such as "00" → "01" → "10" → "11" → "00."

The shared physical data channel transmitter unit 16B is configured to transmit the packet transmitted from each of the HARQ process, at each of the TTI in the shared physical data channel (a physical data channel). Note that the shared physical data channel is associated with the shared physical control channel.

The dedicated physical control channel receiver unit 17 is configured to receive a dedicated physical control channel (a HARQ feedback physical channel) including the transmission acknowledgment information such as an ACK, a NACK, and a Revert Request.

Here, the Revert Request is a request for a retransmission of a lost packet. Accordingly, when the retransmission/scheduler function 18 receives the Revert Request, the retransmission/scheduler function 18 controls a predetermined packet (the packet transmitted at the last TTI, for example) to be retransmitted.

It should be noted that the dedicated physical control channel receiver unit 17 is configured to determine that the receiver side apparatus 30 is in the DTX state when the transmission acknowledgment information for each of the packet is not received within a predetermined period of time.

Meanwhile, as shown in Fig. 1, the receiver side apparatus 30 includes a shared physical control receiver unit 31A, a shared physical data channel receiver unit 31B, multiple HARQ processes 32, a dedicated physical control channel transmitter unit 33, a TSN extracting unit 34, a sequence control buffer 35, and an RLC entity 36.

The shared physical control channel receiver unit 31A is configured to receive the shared physical control channel (the physical control channel) transmitted from the transmitter side apparatus 10. The shared physical control channel receiver unit 31A is configured to decode the L1 control information included in the shared physical control channel. Then, the shared physical control channel receiver unit 31A notifies, to the corresponding HARQ process 32, the decoded LI control information. Further, the shared physical control channel receiver unit 31A notifies, to the dedicated physical control channel transmitter unit 33, the NDI in the decoded L1 control information.

The shared physical data channel receiver unit 31 B is configured to transmit the packet included in the shared physical data channel at each of the TTI, to the corresponding HARQ process 32 through the transport channel, based on the L1 control information transmitted through the shared physical control channel.

Each of the HARQ processes 32 is configured to decode the packet transmitted from the shared physical data channel receiver unit 31 B through the transport channel, according to the L1 control information notified from the shared physical control channel receiver unit 31A, and then to transmit the decoded packet to the TSN extracting unit 34.

In addition, each of the HARQ processes 32 is configured to notify, to the dedicated physical control channel transmitter unit 33, the decoding result of the packet (a success or a failure of the decoding).

The dedicated physical control channel transmitter unit 33 is configured to transmit the transmission acknowledgment information (ACK/NACK) through the dedicated physical control channel (the HARQ feedback physical channel), based on the decoding result of the packet, the decoding result notified from each of the HARQ processes 32.

The dedicated physical control channel transmitter unit 33 is also configured to transmit the transmission acknowledgment information (Revert Request) through the dedicated physical control channel (the HARQ feedback physical channel), based on the NDI notified from the shared physical control channel receiver unit 31A.

Specifically, the dedicated physical control channel transmitter unit 33 is configured to transmit the transmission acknowledgment information (Revert Request) for the packet, without depending on the decoding result of the packet, the decoding result notified from each of the HARQ process 32, when "a NDI notified from the shared physical control channel receiver unit 31A (received NDI)" is different from "a NDI which has been expected to be received next (expected NDI)".

Here, when the NDI is configured of 2 bits, the dedicated physical control channel transmitter unit 33 is configured to update the Expected NDI in a manner such as "00"→ "01"→ "10"→ "11"→ "00," for every time the dedicated physical control channel transmitter unit 33 is notified of the NDI included in the shared physical control channel which has been successfully received from the shared physical control channel receiver unit 31A.

Further, the dedicated physical control channel transmitter unit 33 is configured to transmit the transmission acknowledgment information (Revert Request) that indicates the retransmission request for the lost packet, through the dedicated physical control channel (the HARQ feedback physical channel), when the "Received NDI" is ahead of the "NDI which has been expected to be received next (Expected NDI)" (for example, when the "Received NDI" is "01" and the "Expected NDI" is "00").

Moreover, the dedicated physical control channel transmitter unit 33 may be configured to transmit the transmission acknowledgment information (ACK) that indicates a reception success of the packet, through the dedicated physical control channel (HARQ feedback physical channel), when the "Received NDI" is behind of the "NDI which has been expected to be received next (Expected NDI)" (for example, when "received NDI" is "00" and the "Expected NDI" is "01"

Note that the HARQ feedback physical channel needs to transmit at least three types of the transmission acknowledgment information. Therefore, at least 2 bits are needed to be prepared in the HARQ feedback physical channel as bits used for notifying the transmission acknowledgment information.

The TSN extracting unit 34 is configured to extract the TSN from the packet transmitted by each of the HARQ process, and to store each of the packets into the sequence control buffer 35 based on the extracted TSN, so as to transmit the packets to the RLC entity 36 in the order of the TSNs.

The RLC entity 36 is configured to refer to the TSN of the packet transmitted from the sequence control buffer 35, and to perform the Outer ARQ retransmission control for the packet. Note that the RLC entity 36 may be configured to perform the Outer ARQ retransmission control in the packet unit, or in the plurality of the packets unit.

### (Operation of the mobile communication system according to the first embodiment of the present invention)

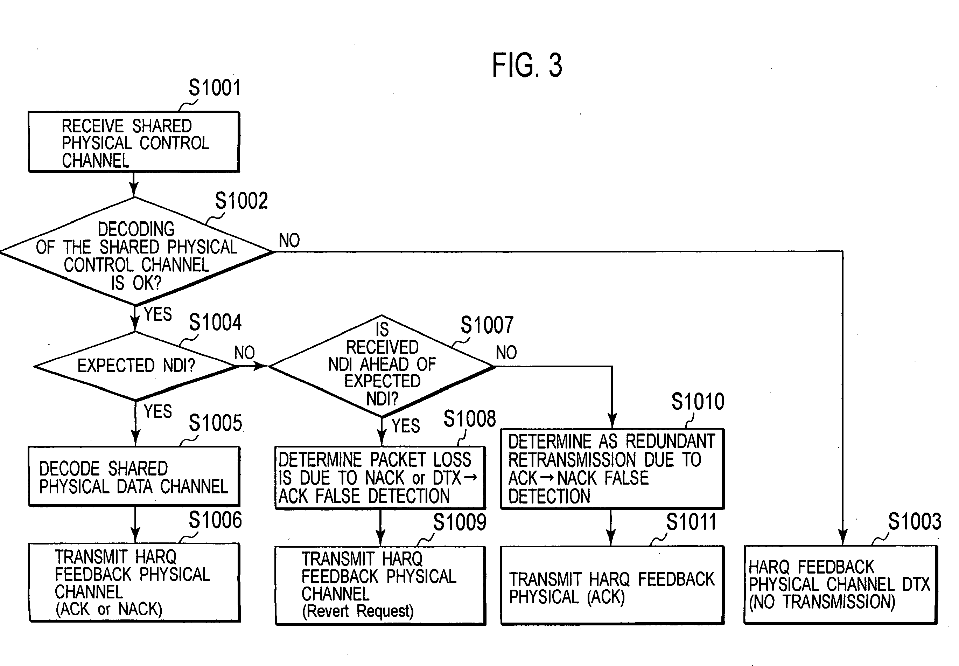

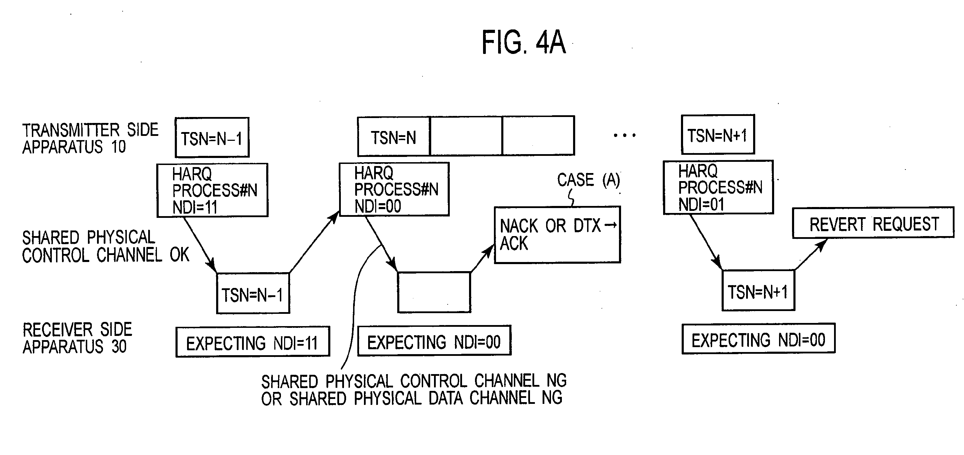

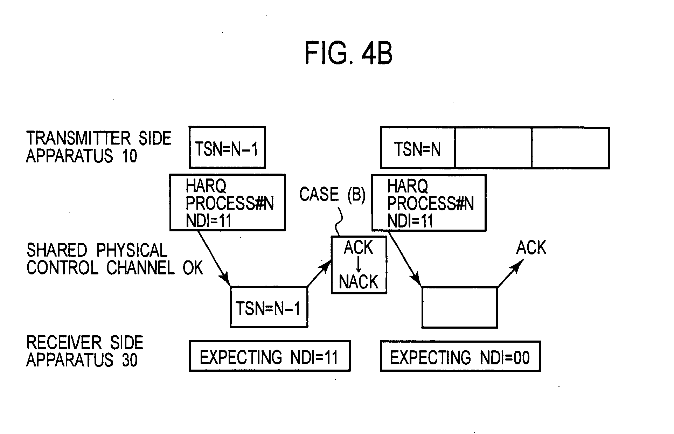

Hereinafter, an operation of the mobile communication system according to the present embodiment will be described with reference to Figs. 3, 4A and 4B. Specifically, a description will be given for the retransmission control of the packet transmitted from a base station (a transmitter side apparatus 10) to a mobile station (receiver side apparatus 30), in the mobile communication system according to the present embodiment.

As shown in Fig. 3, in step S1001, the mobile station receives the shared physical control channel (such as the HS-SCCH) transmitted from the base station.

In step S1002, it is determined whether or not a the reception and a decoding of the shared physical control channel has been successful.

When the reception or decoding of the shared physical control channel has been failed, in step S1003, the mobile station goes into the DTX state in which the mobile station does not transmit the HARQ feedback physical channel (such as the DPCCH).

On the other hand, when the reception or decoding of the shared physical control channel has been successful, in step S1004, the mobile station determines whether or not the NDI received through the shared physical control channel (Received NDI) is consistent with the NDI which has been expected to be received next (Expected NDI).

When it is determined that the "Received NDI" is consistent with the "Expected NDI," in step S1005, the mobile station decodes the packet included in the shared physical data channel, based on the L1 control information received through the shared physical control channel.

In step S1006, the mobile station transmits the transmission acknowledgment information (ACK/NACK) based on the decoding result of the packet, through the HARQ feedback physical channel.

On the other hand, when it is determined that the "Received NDI" is determined to inconsistent with the "Expected NDI," in step S1007, the mobile station determines whether the "received NDI" is ahead of the "Expected NDI."

When it is determined that the "Received NDI" is ahead of the "Expected NDI," in step S1008, the mobile station determines that the loss of the packet has occurred owing to either that the ACK is falsely detected when it is actually the NACK, or that the reception of the ACK is falsely detected when it is actually in the DTX state. (the case (A) of Fig.4A) Accordingly, in step S1009, the mobile station transmits the transmission acknowledgment information (the Revert Request) that indicates the retransmission request for the lost packet (the packet "TSN=N" in Fig. 4A), through the HARQ feedback physical channel, without depending on the decoding result of the packet, the decoding result notified from each of the HARQ processes.

On the other hand, when it is determined that the "Received NDI" is behind the "Expected NDI," in step S1010, the mobile station determines that the transmission is a redundant retransmission arisen from the false detection of the ACK as being the NACK (case (B) in Fig. 4B).

Accordingly, in step S1011, the mobile station transmits the transmission acknowledgment information (the ACK) through the HARQ feedback physical channel, without depending on the decoding result of the packet, the decoding result notified from each of the HARQ processes.

### (Effect and advantage of the mobile communication system according to the first embodiment of the present invention)

The mobile communication system according to the present embodiment is configured to detect the loss of the packet based on the NDI configured of multiple bits, and to transmit the transmission acknowledgement information (the Revert Request) without waiting for the retransmission control by the RLC layer. Accordingly, the transmission delay can be suppressed.

### Industrial Applicability

As has been described above, the present invention can provide a retransmission control method and a receiver side apparatus, which performs a retransmission control by promptly detecting a loss of a packet, when a transmitter side apparatus falsely detects transmission acknowledgment information transmitted through a HARQ feedback physical channel.

## Claims

1. A retransmission control method which performs a retransmission control for a packet transmitted from a transmitter side apparatus to a receiver side apparatus through a physical data channel based on transmission acknowledgment information for the packet, comprising:
transmitting, at the transmitter side apparatus, a new data indicator configured of multiple bits and updated when a new packet is transmitted, through a physical control channel associated with the physical data channel; and
transmitting, at the receiver side apparatus, the transmission acknowledgment information, without depending on a decoding result of the packet received through the physical data channel, when the new data indicator received through the physical control channel is different from a new data indicator which has been expected to be received next at the receiver side apparatus.

2. The retransmission control method according to claim 1, wherein in the transmission of the acknowledgement information, the receiver side apparatus is configured to transmit a transmission acknowledgement information that indicates a retransmission request for a lost packet, when the received new data indicator is ahead of the new data indicator which has been expected to be received next at the receiver side apparatus.

3. The retransmission control method according to claim 1, wherein in the transmission of the acknowledgement information, the receiver side apparatus is configured to transmit a transmission acknowledgement information that indicates a reception success of the packet, when the received new data indicator is behind the new data indicator which has been expected to be received next at the receiver side apparatus.

4. A receiver side apparatus, comprising:
a physical control channel receiver unit configured to receive a physical control channel that includes a new data indicator configured of multiple bits and updated when a new packet is transmitted;
a physical data channel receiver unit configured to receive a physical data channel associated with the physical control channel; and
a transmission acknowledgment information transmitter unit configured to transmit the transmission acknowledgment information, without depending on a decoding result of the packet received through the physical data channel, when the new data indicator received through the physical control channel is different from a new data indicator which has been expected to be received next at the receiver side apparatus.

5. The receiver side apparatus according to claim 4, wherein the physical control channel transmitter unit is configured to transmit the transmission acknowledgement information that indicates a retransmission request for a lost packet, when the received new data indicator is ahead of the new data indicator which has been expected to be received next at the receiver side apparatus.

6. The receiver side apparatus according to claim 4, wherein the physical control channel transmitter unit is configured to transmit the transmission acknowledgement information that indicates a reception success of the packet, when the received new data indicator is behind the new data indicator which has been expected to be received next at the receiver side apparatus.
